# EUROPÄISCHE PATENTSCHRIFT

(11) **EP 1 437 956 B1**
(45) Veröffentlichungstag und Bekanntmachung des Hinweises auf die Patenterteilung: **03.09.2008**
(21) Anmeldenummer: 02779153.2
(22) Anmeldetag: 08.10.2002
(51) Int. Cl.: A47J 27/00

(54) **IDENTIFIKATIONSSYSTEM FÜR EINSCHUBELEMENTE ZUR TEMPERIERUNG VON IN BEHÄLTNISSEN AUFGENOMMENEN SPEISEN**
IDENTIFICATION SYSTEM FOR INSERT ELEMENTS FOR TEMPERING FOODS ACCOMMODATED IN CONTAINERS
SYSTEME D'IDENTIFICATION POUR ELEMENTS D'INSERTION CONCUS POUR TEMPERER DES ALIMENTS SE TROUVANT DANS DES RECIPIENTS

(30) Priorität: 10.10.2001 DE 10150949
(43) Veröffentlichungstag der Anmeldung: 21.07.2004
(73) Patentinhaber: MGS Modular Galley Systems AG, 89275 Elchingen (DE)
(72) Erfinder: Walter, Hubert, Eric, 89073 Ulm (DE)
(74) Vertreter: Lorenz, Markus
(86) Internationale Anmeldenummer: PCT/DE2002/003835
(87) Internationale Veröffentlichungsnummer: WO 2003/032790

(56) Entgegenhaltungen:
- EP-A- 1 087 641
- US-A- 5 466 915
- US-A- 5 628 241
- US-A- 5 893 996
- US-A- 5 968 398
- US-B1- 6 281 611

## Beschreibung

Die Erfindung betrifft ein Identifikationasystem für Einschubelemente zur Temperierung, bevorzugt zur induktiven Erwärmung von in Behältnissen aufgenommenen Speisen. Sie kann vorteilhaft insbesondere für die kurzfristige, ökonomische und qualitativ hohe Erwärmung von vorgefertigten Speisen für den Verzehr eingesetzt werden. Besonders Vorteilhaft kann die erfindungsgemäße Lösung in Induktionsöfen eingesetzt werden.

Geeignete Ausführungeformen solcher Induktionsöfen sind in DE 198 18 831 A1 und US 5, 466, 915 beschrieben.

Dabei sind in mehreren übereinander angeordneten horizontalen Ebenen ein oder mehrere Induktionsspulen angeordnet, wobei die Anzahl der Induktionsspulen pro Ebene variiert bzw. gewählt werden kann.

Die Behältnisse, in denen die Speisen erwärmt werden sollen, bestehen aus einem für die induktive Erwärmung geeigneten Material bzw. sind zumindest mit einem solchen Material beschichtet oder enthalten ein solches Material.

Da die induktive Erwärmung am effektivsten erreicht werden kann, wenn die entsprechenden Behältnisse möglichst optimal in Bezug zur Anordnung der jeweiligen Induktionsspulen positioniert werden, ist es sinnvoll, entweder die jeweiligen Behältnisse entsprechend zu dimensionieren oder in ihrer Form so zu wählen, dass dies erreicht werden kann.

Da aber hierfür ein erhöhter Arbeitsaufwand erforderlich ist und insbesondere bei den durch Erwärmung heißen Behältnissen auch ein Gefahrenpotential gegeben ist, ist es günstiger, Einschubelemente mit entsprechenden Aufnahmen für solche Behältnisse einzusetzen. Die Aufnahmen können in Form von Vertiefungen aber auch als entsprechend ausgebildete Aussparungen ausgeführt sein, in die die jeweiligen Behältnisse eingesetzt werden können. Ein solches Einschubelement kann dann durch die offene Tür eines Induktionsofens eingeführt und unmittelbar auf bzw. in einem geringen Abstand über einer Ebene, in der Induktionsspulen angeordnet sind, positioniert bzw. in entsprechenden Aufnahmen an der Induktionsofeninnenwand gehalten werden.

In der Regel werden in einem solchen Einschubelement unterschiedliche Behältnisse in die jeweiligen Aufnahmen eingesetzt, was zum einen die jeweilige Größe der Behältnisse und zum anderen unterschiedliche Speisen betrifft. Dabei sollen unter Speisen nicht nur solche an sich, sondern auch beispielsweise Getränke verstanden werden. Hierunter sollen auch Behältnisse oder Aufnahmen für Wasser fallen, wobei das Wasser induktiv erwärmt und verdampft wird, wodurch die für die Erwärmung von Speisen erforderliche Zeit und Energie reduziert sowie die Qualität der Speisen verbessert werden können.

Die Einschubelemente werden mit den Behältnissen vor der eigentlichen Erwärmung vorbestückt und kurz vor dem Verzehr dem Induktionsofen zugeführt, wobei dann die Erwärmung der Speisen innerhalb sehr kurzer Zeit, d.h. innerhalb weniger Minuten erreicht werden kann.

Durch die Vorbestückung der Einschubelemente und die unterschiedlichen zu verwendenden Behältnisse ergeben sich aber Probleme. So können beispielsweise Behältnisse Verwendung finden, die in ihren Abmessungen so groß sind, dass eine effektive, kurzzeitige Erwärmung mittels einer einzeigen Induktionsspule nicht erreichbar ist, so daß eine entsprechende Positionierung in Bezug zu beispielsweise zwei solcher Induktionsspulen erfolgen sollte.

Ein weiteres Problem, das infolge dieser Vorbestükkung mit den unterschiedlichen Behältnissen in solche Einschubbehälter beachtet werden muß, besteht darin, dass auch eine Bestückung mit Behältnissen erfolgt, in denen Speisen bzw. Getränke enthalten sind, die nicht erwärmt werden sollen, wie dies beispielsweise bei den unterschiedlichsten Salaten der Fall ist.

Selbstverständlich können auch eine oder mehrere Aufnahmen in einem Einschubelement leer bleiben, so dass eine oder auch mehrere in Bezug zu einer solchen Aufnahme angeordnete Induktionsspule während des Betriebes des Induktionsofens ebenfalls ausgeschaltet bleiben sollte.

Es ist also erforderlich, bei Verwendung von vorbestückten Einschubbehältern für die Erwärmung von Speisen ein selektives, gezieltes Einschalten bestimmter Induktionsspulen in den jeweiligen horizontalen Ebenen, dem jeweiligen Binschubbehälter bzw. dessen Bestückung berücksichtigend, durchzuführen. Diese Tatsache sollte bereits nach dem Schließen der Tür des Induktionsofens, also vor der eigentlichen Erwärmung der Speisen berücksichtigt werden können.

Eine Möglichkeit der Detektion der Belegung von Einschubbehältnissen wird in der US-Patentschrift US 5,628,241 offenbart. Hier wurden zur Detektion jedoch die Induktionsheizspulen der in der genannten Schrift beschriebenen Vorrichtung verwendet.

Es ist daher Aufgabe der Erfindung, ein Identifikationssystem für Einschubelemente vorzuschlagen, mit dem die jeweiligen Konfiguration und gegebenenfalls auch die Bestückung mit Behältnissen eines solchen Einschubelementes erkannt und berücksichtigt werden kann.

Erfindungsgemäß wird diese Aufgabe mit einem Identifikationssystem, das die Merkmale des Anspruchs 1 aufweist, gelöst. Vorteilhafte Ausgestaltungsformen der Erfindung können mit den in den untergeordneten Ansprüchen genannten Merkmalen erreicht werden. Eine vorteilhafte Verfahrensführung kann gemäß dem nebengeordneten Anspruch 14 erreicht werden.

Bei dem erfindungsgemäßen Identifikationssystem wird an diesen Einschubbehältern mindestens ein elektromagnetisch oder magnetisch detektierbares Element an jeweils vorgebbaren Positionen angebracht. Zwei oder mehrere solch elektromagnetisch oder magnetisch detektierbare Elemente (Informationsinhalt jeweils 1 Bit) sollen bevorzugt an äußeren randseitigen Stirnflächen der Einschubelemente angebracht sein, wobei bestimmte Mindestabstände, beispielsweise mindestens 20 mm Abstände eingehalten werden sollten. Für die Anbringung dieser detektierbaren Elemente bieten sich insbesondere die seitlichen Stirnflächen der Einschubelemente an, die parallel zu den seitlichen Innenwänden des Induktionsofens ausgerichtet sind. Es können aber auch andere Anordnungen für diese Elemente, beispielsweise Ober-, Unterseite oder Griffelemente gewählt werden.

Auch die rückwärtige Stirnfläche der Einschubelemente kann hierfür genutzt werden.

Unter Berücksichtigung der vorgegebenen Positionen solcher elektromagnetisch detektierbarer Elemente an den Einschubbehältern werden bei dem erfindungsgemäßen Identifikationssystem Detektoren oder Detektoreinheiten verwendet, die entsprechend der vorgegebenen Positionen der elektromagnetisch detektierbaren Elemente an den Einschubelementen an bzw. in der Wandung des Induktionsofens angeordnet sind, verwendet. Diese Detektoren oder Detektoreinheiten sind mit der Steuerung für die Induktionsspulen verbunden, so dass ein gezieltes Einschalten lediglich ausgewählter Induktionsspulen in der jeweiligen horizontalen Ebene, unter Berücksichtigung des jeweiligen Einschubelementes bzw. dessen Bestückung erfolgen kann, wohingegen andere Induktionsspulen, die in Bezug zu Bereichen des Einschubelementes, in denen keine Behältnisse mit Speisen oder Behältnisse mit Speisen bzw. Getränken, die nicht erwärmt werden sollen, angeordnet sind, ausgeschaltet bleiben. Es kann aber auch eine gezielte Leistungsregelung der einzelnen Induktionsspulen allein oder zusätzlich erfolgen.

Es ist sicher zweckmäßig, die Einschubelemente aus einem Material auszubilden, das nicht induktiv erwärmt werden kann. Hierfür bieten sich die unterschiedlichen Kunststoffe, aber auch nicht ferromagnetische Materialien, wie beispielsweise Aluminium an.

An solchen Einschubelementen können dann elektromagnetisch oder magnetisch detektierbare Elemente aus einem ferromagnetischen Material an den bestimmten, die Detektoren bzw. Detektoreinheit Anordnung berücksichtigende elektromagnetischen oder magnetisch detektierbaren Elemente angebracht sein. Diese können beispielsweise ein ferromagnetisches Material, beispielsweise Stahlbleche, bevorzugt mit bekannten Abmaßen, was insbesondere die Breite und Höhe solcher Bleche betrifft, eingesetzt werden. In solchen Elementen können aber auch Aussparungen, z.B. in Form von Schlitzen oder Löchern ausgebildet sein, die dann die Funktion von detektierbaren Elementen erfüllen können. Solche Aussparungen können aber auch zumindest die Funktion der elektromagnetisch oder magnetischen Elemente erfüllen, wenn ein solches Einschubelement ganz oder teilweise aus einem ferromagnetischen Material besteht.

Elektromagnetisch detektierbare Elemente können aber auch Elektromagnete, z.B. elektromagnetische Spulen (bevorzugt Flachspulen) sein. Es können aber auch Permanentmagnete als elektromagnetisch oder magnetisch detektierbare Elemente an den Einschubelementen angebracht werden.

Als Detektoren können auch unter Berücksichtigung der an den Einschubelementen vorhandenen elektromagnetisch detektierbaren Elemente Reedkontakte eingesetzt werden.

Werden sogenannte Detektoreinheiten verwendet, kann eine solche Detektoreinheit aus jeweils mindestens einem, bevorzugt jedoch zwei oder mehrere Permanentmagneten und einem Reedkontakt gebildet werden. Im Falle das zwei Permanentmagneten Verwendung finden, sollten diese in gleichen Abständen an zwei sich gegenüberliegenden Seiten eines solchen Reedkontaktes angeordnet sein und möglichst eine Ausrichtung der Pole gewählt werden. Dies kann z.B. mit zwei mit gleicher Polausrichtung angeordneten Permanentmagneten oder entsprechend geschalteter Elektromagneten erreicht werden. Anstelle der Permanentmagneten können jedoch auch Induktionsspulen eingesetzt werden.

Für die Identifikation des jeweiligen Einschubelementes können Elektromagnete oder Induktionsspulen zur detektion lediglich kurzzeitig eingeschaltet werden und die Identifikation durch Erkennung des entweder vorhandenen oder nicht vorhandenen elektromagnetisch detektierbaren Elementes erfolgen, so dass keine dauerhafte Identifikation bzw. Beeinflussung erfolgt.

Unabhängig davon, ob eine Detektoreinheit Permanentmagnete oder Induktionsspulen verwendet, wird durch das Vorhandensein eines elektromagnetisch oder magnetisch detektierbaren Elementes das Magnetfeld beeinflußt und durch diese Beeinflussung der jeweilige Reedkontakt geschlossen oder geöffnet und das Schließen bzw. Öffnen des Kontaktes entsprechende Signale an die Steuerung für das Einschalten bzw. das ausgeschaltet lassen der einzelnen Induktionsspulen und/oder deren gezielte Leistungsregelung übermittelt.

Als Detektor kann aber auch, wie bereits erwähnt, jeweils ein Elektromagnet, bevorzugt eine Induktionsspule eingesetzt werden, wobei als elektromagnetisch detektierbares Element, wiederum ein ferrromagnetisches Material oder auch eine entsprechende Spule am Einschubelement einsetzbar sind.

Eine solche Spule, die den eigentlichen Detektor bildet, wird kurzzeitig mit einer elektrischen Spannung beaufschlagt, so dass im elektromagnetisch detektierbaren Element eine elektrische Spannung induziert und ein elektromagnetisches Feld aufgebaut wird. Nach dem Ausschalten der Spule des Detektors wird in dieser Spule gemäß der "Lenzschen Regel" ebenfalls eine Spannung induziert, wenn ein elektromagnetisch detektierbares Element im elektromagnetischen Feld, also am jeweiligen Einschubbehälter an der jeweiligen Position für diesen Detektor angeordnet ist, so dass auch dies als Signal für das Einschalten bzw. das ausgeschaltet lassen bestimmter Induktionsspulen ausgenutzt werden kann.

Vorteilhaft ist es außerdem, bei Induktionsöfen, in denen mehrere übereinander angeordnete horizontale Ebenen mit Induktionsspulen vorhanden sind, die Detektoreinheiten mit Permanentmagneten oder elektromagnetischen Spulen so anzuordnen, dass bei den Detektoreinheiten jeweils unmittelbar benachbarter horizontaler Ebenen jeweils eine Polung, die um 180° verdreht ist, gewählt wird, um die gegenseitige Beeinflussung der magnetischen bzw. elektromagnetischen Felder dieser Ebenen weitestgehend zu vermeiden.

Zur Vermeidung bzw. Verringerung der Beeinflussung von Detektoren oder Detektoreinheiten benachbarter horizontaler Ebenen können Detektoren oder Detektoreinheiten jeweils alternierend an sich gegenüberliegenden oder unterschiedlichen Innenwänden angeordnet sein.

Die elektromagnetisch detektierbaren Elemente an den Einschubelementen sollten möglichst an diesen so angebracht sein, dass die Abstände zu den jeweiligen Detektoren bzw. Detektoreinheiten nicht größer als 30 mm, bevorzugt kleiner als 20 mm, ganz besonders bevorzugt kleiner als 10 mm sind.

Vorteilhaft ist es außerdem, wenn die für die Detektoren bzw. Detektoreinheit verwendeten Permanentmagnete, aber auch die Induktionsspulen mit einer magnetischen bzw. elektromagnetischen Abschirmung ausgestattet sind. Diese Abschirmung sollte gewährleisten, dass die Magnetfelder oder elektromagnetischen Felder vollkommen bzw. in stark abgeschwächter Form, nicht die Umgebung des Induktionsofens beeinflussen bzw. innerhalb des Induktionsofens gehalten werden. Vorteilhaft ist eine solche Abschirmung auch als sogenannter Reflektor ausgebildet, so dass die Feldlinien bevorzugt in Richtung auf die gegebenenfalls zu detektierenden elektromagnetisch detektierbaren Elementen ausgerichtet werden, wodurch sich die Detektionsempfindlichkeit weiter erhöhen lässt.

Neben der ausführlich beschriebenen Anwendung der Erfindung in Induktionsöfen, ist auch ein Einsatz in Kühlgeräten möglich. Dabei kann die Kühlleistung geregelt werden, um speisenspezifisch geeignete Temperaturen einzuhalten oder auch die Befüllung des Kühlgerätes zu berücksichtigen. Die Regelung kann auch so durchgeführt werden, dass verschiedene horizontale Ebenen, in den Einschubbehälter eingeführt bzw. leer gelassen sind, entsprechend geregelt gekühlt werden.

Die erfindungsgemäße Lösung weist deutliche Vorteile, insbesondere gegenüber optischen Identifikationssystemen auf. So neigen beispielsweise Scannersysteme in Verbindung mit sogenannten Barcodes, die gegebenenfalls auch solchen Einschubelementen angebracht sind, zur Verschmutzung, so dass Detektionsfehler bei längerem Betrieb auftreten.

Da bei der Erwärmung von Speisen die Wasserdampfbildung zwangsläufig nicht vermieden werden kann, können optische Identifikationssysteme nur sinnvoll mit stark erhöhtem Kostenaufwand realisiert werden.

Mechanische Systeme scheiden wegen schwieriger Handhabbarkeit und schlechter Zuverlässigkeit, insbesondere im Langzeitbetrieb als entsprechendes Identifikationssystem ebenfalls aus.

## Patentansprüche

1. Identifikationssystem für Einschubelemente zur Temperierung von in Behältnissen aufgenommenen Speisen,
bei dem mehrere Behältnisse in in den Einschubelementen ausgebildeten Aufnahmen lokal definiert angeordnet sind und die mit Behältnissen bestückten Einschubelemente in einen Induktionsofen oder Kühlgerät eingeführt und dabei die Behältnisse in Bezug zu im Induktionsofen in mindestens einer horizontalen Ebene mehreren Induktionsspulen positioniert werden,
**dadurch gekennzeichnet, dass** an den Einschubelementen mindestens ein elektromagnetisch oder magnetisch detektierbares Element an jeweils vorgebbarer Position angebracht ist und an der Innenwand des Induktionsofens parallel zu horizontalen Ebenen mit Induktionsspulen oder horizontalen Ebenen eines Kühlgeräts in Bezug zu vorgegebenen Positionen für elektromagnetisch detektierbare Elemente mindestens zwei mit einer Steuerung für die Induktionspulen oder der Kühlleistung des Kühlgerätes verbundene zusätzliche Detektoren oder zusätzliche Detektoreinheiten angeordnet sind.

2. Identifikationssystem nach Anspruch 1,
**dadurch gekennzeichnet, dass** elektromagnetisch detektierbare Elemente aus einem ferromagnetischen Material bestehen.

3. Identifikationssystem nach Anspruch 1,
**dadurch gekennzeichnet, dass** elektromagnetisch oder magnetisch detektierbare Elemente Spulen oder Permanentmagnete sind.

4. Identifikationssystem nach einem der Ansprüche 1 bis 3,
**dadurch gekennzeichnet, dass** die elektromagnetisch detektierbaren Elemente an äußeren Rändern der Einschubelemente angeordnet sind.

5. Identifikationssystem nach mindestens einem der Ansprüche 1 bis 4,
**dadurch gekennzeichnet, dass** die Detektoren Reedkontakte sind.

6. Identifikationssystem nach einem der Ansprüche 1 bis 4,
**dadurch gekennzeichnet, dass** die Detektoren Elektromagnete sind.

7. Identifikationssystem nach Anspruch 6,
**dadurch gekennzeichnet, dass** die Detektoren Spulen sind.

8. Identifikationssystem nach mindestens einem der Ansprüche 1 bis 4,
**dadurch gekennzeichnet, dass** die Detektoreinheiten aus jeweils mindestens einem Elektro- oder Permanentmagneten und einem Reedkontakt gebildet sind.

9. Identifikationssystem nach Anspruch 8,
**dadurch gekennzeichnet, dass** Detektoreinheiten aus jeweils einem Reedkontakt und zwei oder mehreren Elektro- oder Permanentmagneten bestehen.

10. Identifikationssystem nach Anspruch 9,
**dadurch gekennzeichnet, dass** die Polausrichtung der Elektro- oder Permanentmagneten gleich ist.

11. Identifikationssystem nach Anspruch 9 oder 10,
**dadurch gekennzeichnet, dass** die Polausrichtung der Permanentmagnete an benachbarten horizontalen Ebenen mit Induktionsspulen um jeweils 180° zueinander gedreht ist.

12. Identifikationssystem nach mindestens einem der Ansprüche 1 bis 4,
**dadurch gekennzeichnet, dass** die Detektoreinheiten jeweils aus einem Reedkontakt und mindestens einer Spule bestehen.

13. Identifikationssystem nach Anspruch 2,
**dadurch gekennzeichnet, dass** die elektromagnetisch oder magnetisch detektierbaren Elemente Stahlbleche mit bekannten Abmessungen sind.

14. Identifikationssystem nach Anspruch 13,
**dadurch gekennzeichnet, dass** in den elektromagnetisch oder magnetisch detektierbaren Elementen an vorgebbaren Positionen Aussparungen ausgebildet sind.

15. Identifikationssystem nach einem der Ansprüche 1 bis 14,
**dadurch gekennzeichnet, dass** die Einschubelemente aus Kunststoff oder einem anderen nicht ferromagnetischen Material gebildet sind.

16. Identifikationssystem nach einem der Ansprüche 1 bis 14,
**dadurch gekennzeichnet, dass** an den bzw. In den Ofenwandungen angeordneten Permanentmagneten oder Induktionsspulen als Elemente der Detektoren oder Detektoreinheiten auf der den elektromagnetisch detektierbaren Elementen gegenüberliegende Seite eine magnetische Abschirmung vorhanden ist.

17. Verfahren zur Temperierung von in Behältnissen aufgenommenen Speisen unter Verwendung eines Identifikationssystems nach einem der Ansprüche 1 bis 16,
**dadurch gekennzeichnet, dass** ein mit Speisen enthaltenden Behältnissen bestücktes Einschubelement in einen Induktionsofen parallel zu in horizontalen Ebenen angeordneten Induktionsspulen oder ein Kühlgerät eingeführt und mit zusätzlichen Detektoren oder zusätzlichen Detektoreinheiten das Nicht- oder Vorhandensein von elektromagnetisch detektierbaren Elementen an bestimmten Positionen des Einschubelements bestimmt und mittels dieser Bestimmung die einzelnen Induktionsspulen zur Speisenerwärmung eingeschaltet werden oder ausgeschaltet bleiben und/oder deren Leistungen jeweils geregelt oder die Leistung des Kühlgeräts geregelt wird.

18. herfahren nach Anspruch 17,
**dadurch gekennzeichnet, dass** ein am Einschubbehälter vorhandenes elektromagnetisch oder magnetisch detektierbares Element ein Magnetfeld einer Detektoreinheit mit Reedkontakt beeinflusst, wodurch der Reedkontakt geschlossen oder geöffnet wird und ein entsprechendes Signal an die Steuerung für die Induktionsspulen oder des Kühlgerätes übermittelt wird.

## Claims

1. An identification system for insert elements for tempering food accommodated in containers, in which a plurality of said containers are arranged in a locally defined manner in receiving means provided in said insert elements, and said insert elements equipped with said containers are introduced into an induction oven or a cooling device, and at the same time said containers will be positioned relative to a plurality of induction coils arranged in at least one horizontal plane inside said induction oven,
**characterized in that** at least one electromagnetically or magnetically detectable element is mounted in a predeterminable position each on said insert elements, and **in that** at least two additional detectors or additional detector units coupled with a control for said induction coils or said heat removal capacity of said cooling device are arranged on the inner wall of said induction oven in parallel with horizontal planes having said induction coils or with horizontal planes of said cooling device relative to predeterminable positions for said electromagnetically detectable elements.

2. Identification system according to claim 1,
**characterized in that** said electromagnetically detectable elements are made of a ferromagnetic material.

3. Identification system according to claim 1,
**characterized in that** said electromagnetically or magnetically detectable elements are coils or permanent magnets.

4. Identification system according to any one of claims 1 to 3,
**characterized in that** said electromagnetically detectable elements are arranged on outer edges of said insert elements.

5. Identification system according to any one of claims 1 to 4,
**characterized in that** said detectors are dry-reed contacts.

6. Identification system according to any one of claims 1 to 4,
**characterized in that** said detectors are electromagnets.

7. Identification system according to claim 6,
**characterized in that** said detectors are coils.

8. Identification system according to at least one of claims 1 to 4,
**characterized in that** said detector units are formed from at least said one electromagnet or permanent magnet each and from said one dry-reed contact.

9. Identification system according to claim 8,
**characterized in that** said detector units are made each of said one dry-reed contact and two or a plurality of said electromagnets or permanent magnets.

10. Identification system according to claim 9,
**characterized in that** the polarity of said electromagnets or said permanent magnets is equal.

11. Identification system according to claim 9 or claim 10,
**characterized in that** said polarity of said permanent magnets on said adjacent horizontal planes with said induction coils is rotated 180° each to one another.

12. Identification system according to at least any one of claims 1 to 4,
**characterized in that** said detector units are made each of said one dry-reed contact and at least of said one coil.

13. Identification system according to claim 2,
**characterized in that** said electromagnetically detectable or magnetically detectable elements are steel plates having known dimensions.

14. Identification system according to claim 13,
**characterized in that** recesses are formed in predeterminable positions in said electromagnetically detectable or said magnetically detectable elements.

15. Identification system according to any one of claims 1 to 14,
**characterized in that** said insert elements are formed from plastic or another material being not ferromagnetic.

16. Identification system according to any one of claims 1 to 14,
**characterized in that** on said permanent magnets or said induction coils as elements of said detectors or detector units mounted on the oven walls and inside thereof respectively, a magnetic shielding is provided on the side opposing said electromagnetically detectable elements.

17. A method for tempering food accommodated in containers using an identification system according to any one of claims 1 to 16,
**characterized in that** said insert element equipped with said containers containing food is introduced into said induction oven in parallel with said induction coils arranged in horizontal planes, or into said cooling device, and **in that** the absence or presence of said electromagnetically detectable elements in particular positions of said insert element are determined with said additional detectors or said additional detector units, and by means of this determination, said individual induction coils are switched on for heating food or remain switched off, and/or each the power thereof are controlled or the power of said cooling device is controlled.

18. Method according to claim 17,
**characterized in that** said electromagnetically or magnetically detectable element provided on said insert container influences a magnetic field of said detector unit having said dry-reed contact whereby said dry-reed contact will be closed or opened, and an equivalent signal is transmitted to said control for said induction coils or said cooling device.

## Revendications

1. Système d'identification pour éléments à tiroirs pour tempérer des plats contenus dans des récipients,
dans lequel plusieurs récipients sont disposés de manière déterminée dans des logements aménagés dans les éléments à tiroirs et les éléments à tiroirs pourvus de récipients sont introduits dans un four à induction ou dans un dispositif de refroidissement et les récipients étant alors positionnés au niveau de plusieurs bobines d'induction disposées dans le four à induction sur au moins un plan horizontal,
**caractérisé en ce que,** au niveau des éléments à tiroirs, au moins un élément pouvant être détecté électromagnétiquement ou magnétiquement est disposé à une position prédéterminée et au niveau de la paroi interne du four à induction, parallèlement aux plans horizontaux avec des bobines d'induction ou aux plans horizontaux d'un dispositif de refroidissement, au niveau des positions prédéterminées pour les éléments détectables électromagnétiquement, et sont disposés au moins deux détecteurs supplémentaires ou unités de détecteurs supplémentaires reliés à une commande pour les bobines d'induction ou pour la puissance de refroidissement du dispositif de refroidissement.

2. Système d'identification selon la revendication 1,
**caractérisé en ce que** les éléments détectables électromagnétiquement sont constitués d'un matériau ferromagnétique.

3. Système d'identification selon la revendication 1,
**caractérisé en ce que** les éléments détectables électromagnétiquement ou magnétiquement sont des bobines ou des aimants permanents.

4. Système d'identification selon l'une des revendications 1 à 3,
**caractérisé en ce que** les éléments détectables électromagnétiquement sont disposés au niveau des bords externes des éléments à tiroirs.

5. Système d'identification selon l'une des revendications 1 à 4, **caractérisé en ce que** les détecteurs sont des contacts Reed.

6. Système d'identification selon l'une des revendications 1 à 4,
**caractérisé en ce que** les détecteurs sont des électro-aimants.

7. Système d'identification selon la revendication 6,
**caractérisé en ce que** les détecteurs sont des bobines.

8. Système d'identification selon l'une des revendications 1 à 4,
**caractérisé en ce que** les unités de détecteurs sont constituées d'au moins un électro-aimant ou un aimant permanent et d'un contact Reed.

9. Système d'identification selon la revendication 8,
**caractérisé en ce que** les unités de détecteurs sont constituées d'un contact Reed et de deux électro-aimants ou aimants permanents ou plus.

10. Système d'identification selon la revendication 9,
**caractérisé en ce que** l'orientation polaire des électro-aimants ou des aimants permanents est identique.

11. Système d'identification selon la revendication 9 ou 10,
**caractérisé en ce que** l'orientation polaire des aimants permanents est décalée de 180° au niveau de plans horizontaux adjacents avec des bobines d'induction.

12. Système d'identification selon au moins l'une des revendications 1 à 4, **caractérisé en ce que** les unités de détecteurs sont constituées d'un contact Reed et d'au moins une bobine.

13. Système d'identification selon la revendication 2,
**caractérisé en ce que** les éléments détectables électromagnétiquement ou magnétiquement sont des tôles d'acier avec des dimensions connues.

14. Système d'identification selon la revendication 13,
**caractérisé en ce que** des évidements sont réalisés à des positions prédéterminées dans les éléments détectables électromagnétiquement ou magnétiquement.

15. Système d'identification selon l'une des revendications 1 à 14,
**caractérisé en ce que** les éléments à tiroirs sont constitués de matière plastique ou d'un autre matériau non ferromagnétique.

16. Système d'identification selon l'une des revendications 1 à 14, **caractérisé en ce que,** au niveau ou dans les aimants permanents ou les bobines d'induction disposées dans les parois du four en tant qu'éléments des détecteurs ou en tant qu'unités de détecteurs, un blindage magnétique est prévu sur le côté opposé aux éléments détectables électromagnétiquement.

17. Procédé pour tempérer des plats contenus dans des récipients à l'aide d'un système d'identification selon l'une des revendications 1 à 16, **caractérisé en ce qu'**un élément à tiroir pourvu de récipients contenant des plats est introduit dans un four à induction parallèlement à des bobines d'induction disposées sur des plans horizontaux ou dans un dispositif de refroidissement et détermine, à l'aide de détecteurs supplémentaires ou d'unités de détecteurs supplémentaires, l'absence ou la présence d'éléments détectables électromagnétiquement à des positions déterminées de l'élément à tiroir et, grâce à cette détermination, les différentes bobines d'induction sont activées ou restent désactivées et/ou leur puissance est ajustée ou la puissance du dispositif de refroidissement est ajustée.

18. Procédé selon la revendication 17,
**caractérisé en ce qu'**un élément détectable électromagnétiquement ou magnétiquement disposé sur le récipient à tiroir influence un champ magnétique d'une unité de détecteur munie d'un contact Reed, le contact Reed étant fermé ou ouvert et un signal correspondant étant transmis à la commande des bobines d'induction ou du dispositif de refroidissement.
